# EUROPÄISCHE PATENTANMELDUNG

(11) **EP 3 057 203 A1**
(43) Veröffentlichungstag der Anmeldung: **17.08.2016**
(21) Anmeldenummer: 15155068.8
(22) Anmeldetag: 13.02.2015
(51) Int. Cl.: H02K 1/27, H02K 15/03

(54) **Rotor einer permanenterregten Synchronmaschine und Verfahren zu dessen Herstellung**

(71) Anmelder: Siemens Aktiengesellschaft, 80333 München (DE)
(72) Erfinder: Braun, Jochen, 94032 Passau (DE); Winkler, Günther, 4785 Haibach (AT)

(57) **Zusammenfassung**

Die Erfindung betrifft einen Rotor (10) einer permanenterregten dynamoelektrische rotatorischen Maschine (1), der Permanentmagnete (11) aufweist, die sich in teilgeschlossenen, im Wesentlichen axial verlaufenden Ausnehmungen (20) befinden und zumindest durch das Zusammenwirken von Abdeckplatten (15) und an den axialen Ausnehmungen (20) vorhandenen Nasen (21) gehalten sind.

## Beschreibung

Die Erfindung betrifft einen Rotor einer permanenterregten dynamoelektrischen rotatorischen Maschine, der Permanentmagnete aufweist, eine permanenterregten dynamoelektrischen rotatorischen Maschine und ein Verfahren zur Herstellung eines derartigen Rotors.

Bei permanenterregten Synchronmaschinen werden Magnete zur Erregung dieser Maschine auf der Oberfläche des Rotors angeordnet oder in axial verlaufenden Taschen positioniert. Dabei wird ein Edelstahlrohr auf den Rotor geschweißt, wobei axiale Abstandshalter zwischen den Magnetpolen vorgesehen sind, welche als Schutz der Magnete dienen und als Einschubhilfe für die Magnete verwendet werden. Im Anschluss an eine Bestückung des Rotors mit Magneten werden die Hohlräume mit Harz vergossen.

Außerdem ist bekannt, die Magnete an der Oberfläche des Rotors aufzukleben und zusätzlich mit einer Glasfaserbandage zu sichern. Dieser Prozess ist jedoch fertigungstechnisch äußerst aufwändig und vor allem bei größeren und leistungsstärkeren Maschinen aufgrund der hohen Magnetkräfte auch während der Montage vergleichsweise gefährlich.

Des Weiteren wird insbesondere bei Windkraftgeneratoren für die die permanenterregten Synchronmaschinen eingesetzt werden, eine Lebensdauer von 20 bis 25 Jahren angestrebt, was mit dieser Methode nicht gesichert ist.

Durch axiales Einschieben der Magnete in axiale Taschen, wie es bei permanenterregten Synchronmaschinen hoher Drehzahl durchgeführt wird, werden oben genannte Nachteile bei außenliegenden Magneten vermieden. Jedoch tritt dann ein Flussverlust durch den höheren Streufluss im Läufereisen auf.

Diese bereits bekannten Befestigungsmöglichkeiten von Permanentmagneten sind unter anderem der DE 102 16 856 A1, der DE 100 20 946 A1 und der DE-U1-80 18 686 zu entnehmen.

Bei Frequenzen größer 10 Hz werden, insbesondere bei Bandagen aus Metall Wirbelströme verursacht, die wiederum hohe Verluste verursachen. Dies reduziert den Wirkungsgrad der Maschine ganz erheblich und führt außerdem zu einer zusätzlichen Erwärmung des Rotors. Die Erwärmung insbesondere dieser Edelstahlhülse überträgt sich auf die an der Oberfläche positionierten Magnete und stellt somit eine thermische Belastung der Magnete dar, die insbesondere bei einem Klemmenkurzschluss der permanenterregten Synchronmaschine auftritt. Dieser Sachverhalt stellt somit eindeutig eine Limitierung bei der elektrischen Auslegung in Frequenz- und somit Polzahl der elektrischen Maschine dar.

Ausgehend davon liegt der Erfindung die Aufgabe zugrunde, einen Rotor einer permanenterregten Maschine zu schaffen, die bei gleichzeitigen einfachen Aufbau eine zusätzliche Erwärmung durch Wirbelstromverluste als auch eine Langlebigkeit des konstruktiven Aufbaus gewährleistet.

Die Lösung der gestellten Aufgabe gelingt durch einen Rotor einer permanenterregten dynamoelektrische rotatorischen Maschine, der Permanentmagnete aufweist, die sich in teilgeschlossenen im Wesentlichen axial verlaufenden Ausnehmungen befinden und zumindest durch das Zusammenwirken von Abdeckplatten und an den axialen Ausnehmungen vorhandenen Nasen gehalten sind.

Ebenso gelingt die Lösung der gestellten Aufgabe durch ein Verfahren zur Herstellung eines Rotors durch folgende Schritte:
- Stanzen einzelner Bleche,
- Paketieren der Bleche, insbesondere auf einer Welle, wobei die Ausnehmungen im Wesentlichen axial fluchtend angeordnet werden,
- Einsetzen der Abdeckplatten in die Ausnehmung derart, dass axial verlaufende Öffnungen gebildet werden, in die die Permanentmagnete eingeschoben werden,
- Ausgießen der verbleibenden Hohlräume zwischen den Abdeckplatten, den Blechen des Rotors und den Permanentmagneten.

Die im Wesentlichen axial verlaufenden Ausnehmungen werden durch axiale Zwischenzähne des Rotors gebildet, an denen am äußeren Umfang Nasen vorgesehen sind, an welchen die Abdeckplatten radial unterhalb eingeführt werden. Somit wird dann, in Umfangsrichtung betrachtet eine geschlossene und in axialer Richtung verlaufende Ausnehmung gebildet in die ein oder mehrere Permanentmagnete einschiebbar sind und die so einen Magnetpol des Rotors bilden. Die zwischen der Abdeckplatte dem Rotorblechpaket und den Permanentmagnet existierenden Hohlräume werden mit einer Vergussmasse ausgegossen, die sicherstellt, dass die Platten als auch die Permanentmagnete fixiert sind und fixiert bleiben und auch unter Ausnutzung der Fertigungstoleranzen nicht verrutschen.

Pro Magnetpol ist somit zumindest eine Abdeckplatte und/oder zumindest ein Permanentmagnet vorgesehen.

Diese erfindungsgemäße Ausgestaltung des Rotors vereinfacht die Herstellung und gewährleistet auch über einen längeren Zeitraum die vorgesehene Positionierung der Permanentmagnete am Rotor.

Diese Abdeckplatten sind vorzugsweise aus Kunststoff, in dem sich keine Wirbelströme bilden können, da Kunststoff ein elektrischer Isolator ist. Somit werden Wirbelstromverluste wie in einer umlaufenden Edelstahlbandage vermieden. Damit ist man nun auch bei der elektrischen Auslegung einer permanenterregten Synchronmaschine, insbesondere für den Windgenerator in Polzahl und Frequenz nicht mehr eingeschränkt.

Dies gestattet eine zusätzliche Optimierungsmöglichkeit einer langsamen bis mittelschnell drehenden permanenterregten Synchronmaschine, wie sie bei direktangetriebenen Windkraftgeneratoren oder bei über eine Getriebestufe angetriebenen Windkraftgeneratoren erwünscht ist.

Durch den erfindungsgemäßen Aufbau des Rotors erhöht sich somit der Wirkungsgrad der permanenterregten Synchronmaschine da auch der Rotor vergleichsweise kühl bleibt. Des Weiteren sind die Permanentmagnete bei einem Klemmenkurzschluss im Stator der permanenterregten Synchronmaschine weniger gefährdet.

Damit sind die Permanentmagnete weiterhin zuverlässig und auch dauerhaft geschützt, was insbesondere die Langlebigkeit eines derartigen Windkraftgenerators fördert. Dies ist besonders vorteilhaft bei Windkraftgeneratoren im off-shore-Einsatz.

Die Erfindung sowie weitere vorteilhafte Ausgestaltungen der Erfindung werden anhand eines Ausführungsbeispiels näher dargestellt. Darin zeigen:
- FIG 1: einen Längsschnitt,
- FIG 2: einen Teilquerschnitt eines Rotors und
- FIG 3: eine Detailaufnahme einer Halterung.

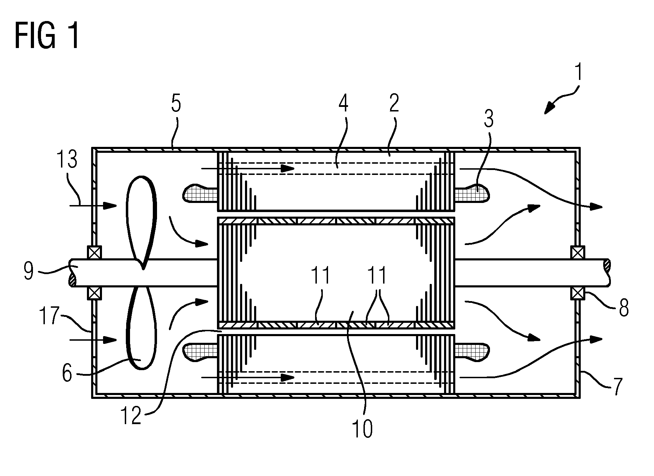

FIG 1 zeigt einen prinzipiellen Längsschnitt, einer permanenterregten dynamoelektrischen Maschine 1, die in einem Gehäuse 5 angeordnet ist. Innerhalb des Gehäuses 5 befindet sich ein Stator 2, der ein Wicklungssystem 3 aufweist, das in nicht näher dargestellten, im Wesentlichen axial verlaufenden Nuten eines Blechpaketes des Stators 2 angeordnet ist und sich in unmittelbarer Nähe eines Luftspaltes 12 der permanenterregten dynamoelektrischen Maschine 1 befindet.

Radial über den Nuten bzw. zwischen den Nuten befinden sich axial verlaufende Kühlkanäle im Stator 2. Von dem Luftspalt 12 beabstandet, befindet sich ein Rotor 10, der mit einer Welle 9 drehfest verbunden ist, die sich in Lagern 8 abstützt. Die Lager 8 sind durch Lagerschilde 7 am Gehäuse 5 gehalten, und weisen an vorgegebenen Stellen Öffnungen 17 auf, durch die ein Kühlluftstrom 13 durch einen Lüfter 6 angetrieben wird.

Der Kühlluftstrom 13, der durch den Lüfter 6 angetrieben wird, teilt sich dabei vorzugsweise auf die axial verlaufenden Kühlkanäle 14 im Stator 2, den Luftspalt 12 und nicht näher dargestellte Kühlkanäle im Rotor 10 auf, um dort u.a. Permanentmagnete zu kühlen. Der erwärmte Kühlluftstrom verlässt die dynamoelektrische Maschine 1 an weiteren Öffnungen 13 des auf der anderen Seite befindlichen Lagerschildes 7, wie dies in FIG 1 prinzipiell dargestellt ist.

Der Rotor 10 weist am radial äußeren Rand in Umfangsrichtung und in axialer Richtung erstreckend Permanentmagnete 11 auf. Die Permanentmagnete 11 bilden dabei einen Magnetpol. Diese Permanentmagnete 11 werden, wie im Folgenden näher beschrieben, in axial zumindest teilgeschlossenen Ausnehmungen 20 angeordnet und dort gehalten. Pro Magnetpol sind je nach Größe des Rotors, also ein oder mehrere axial und/oder nebeneinander angeordnete Permanentmagnete 11 möglich. Die Größe der Permanentmagnete 11 richtet sich unter anderem nach den Parametern bei der Herstellung und dem Handling der Permanentmagnete 11 während der Montage.

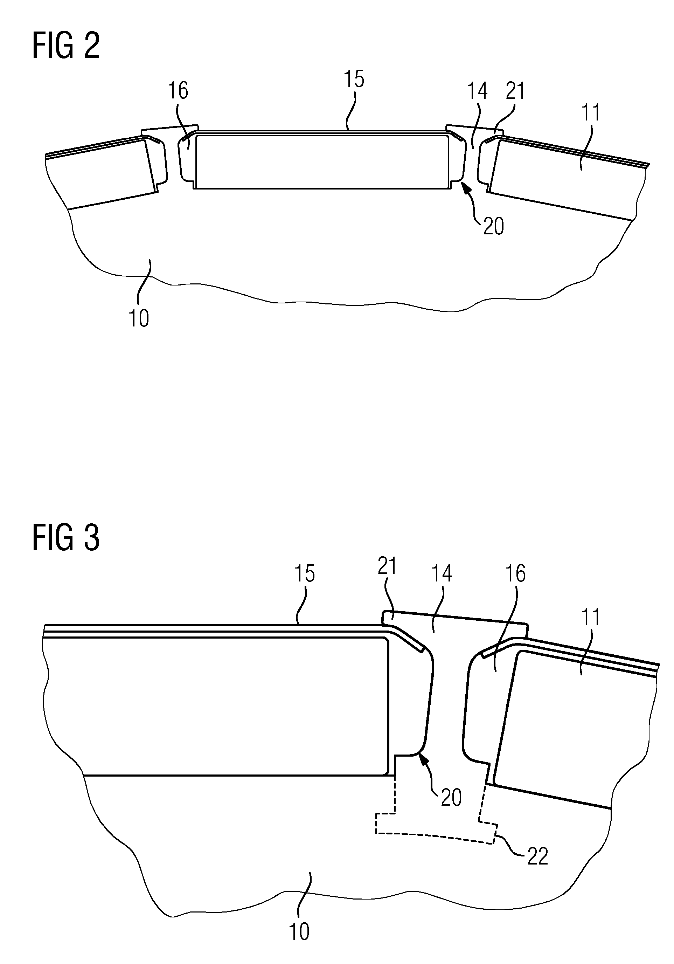

FIG 2 zeigt die Anordnung eines Permanentmagneten 11 in einer Ausnehmung 20, die zwischen zwei Halterungen 14 gebildet ist. Die Halterungen 14 sind Teil der Bleche des Rotors 10, die durch einen Stanzvorgang mit in Umfangsrichtung weisenden einzelnen Nasen 21 gebildet werden. Diese Nasen 21 fixieren eine Abdeckplatte 15, vorzugsweise aus Kunststoff, in die die Permanentmagnete 11 axial eingeschoben werden. Eine zusätzliche Fixierung von Abdeckplatte 15, Permanentmagnet 11 wird durch eine zusätzliche Vergussmasse 16 geschaffen.

Diese Abdeckplatten 15 sind vorzugsweise Massivplatten aus thermoplastischem Copolyester, die eine hohe Schlagfestigkeit bei gleichzeitiger einfacher mechanischer Bearbeitung, wie z.B. Warmverformung aufweisen. Diese Abdeckplatten 15 sind in der vorliegenden Form mit einer gleichbleibenden Dicke ausgestattet und im Bereich der Nasen 21 derart abgeknickt, dass ein bündiger Abschluss vorliegt. Dadurch wird die eingegebene Vergussmasse 16 in die Ausnehmung 20 räumlich begrenzt.

Es zeigt beispielsweise auch FIG 3 in einer größeren Auflösung nochmal die Halterung mit den an der Halterung 14 befindlichen Abdeckplatten 15 dargestellt ist.

Die Halterung 14 kann in einer anderen Ausführungsform auch als separates Teil ausgeführt sein, das in einer Art Schwalbenschwanzverbindung mit dem Rotorblechpaket verbunden ist. Dies ist beispielhaft durch die gestrichelte Linie 22 der FIG 2 zu entnehmen.

In einer anderen Ausführungsform werden zunächst die Permanentmagnete 11 in der Ausnehmung 20 platziert. Dies geschieht entweder allein durch Magnetkräfte zwischen Permanentmagnet 11 und Blechpaket des Rotors 10 und/oder durch einen Kleber. Anschließend werden die Abdeckplatten 15 entweder axial eingesetzt oder radial eingeclipst, indem sie vorher gebogen werden, unter die Nasen geführt und danach durch die Rückstellkraft der Biegung sich unter die Nasen 21 klemmen. Dabei ist es vorteilhaft wenn die Abdeckplatten 15 in Richtung Permanentmagnete 11 eine Vorspannung aufweisen oder die Abdeckplatten 15 zumindest in einem Teilbereich verdickt sind, um so eine Anpresskraft auf die Permanentmagnete 11 auszuüben. Eine zusätzliche Fixierung von Abdeckplatte 15, Permanentmagnet 11 wird - wie oben geschildert - ebenfalls durch eine zusätzliche Vergussmasse 16 geschaffen.

Eine derartige Ausgestaltung eines Rotors 10 eignet sich insbesondere für Generatoren von Windkraftanlagen. Dabei können diese Windgeneratoren direkt oder über ein Getriebe mit der Windturbine verbunden sein.

Die erfindungsgemäße Ausgestaltung des Rotors betrifft sowohl Generatoren mit Außenläufer als auch mit Innenläufer.

## Patentansprüche

1. Rotor (10) einer permanenterregten dynamoelektrischen rotatorischen Maschine (1), der Permanentmagnete (11) aufweist, die sich in teilgeschlossenen, im Wesentlichen axial verlaufenden Ausnehmungen (20) befinden und zumindest durch das Zusammenwirken von Abdeckplatten (15) und an den axialen Ausnehmungen (20) vorhandenen Nasen (21) gehalten sind.

2. Rotor (10) nach Anspruch 1, **dadurch gekennzeichnet, dass** Hohlräume innerhalb der Ausnehmungen (20) zwischen Permanentmagnet (11), Rotor (10) und Abdeckplatte (15) ausgegossen sind, insbesondere durch Vergussharz (16) ausgegossen sind.

3. Rotor (10) nach einem der vorhergehenden Ansprüche, **dadurch gekennzeichnet, dass** in jeder axialen Ausnehmung (20) des Rotors (10) zumindest ein Permanentmagnet (11) vorgesehen ist.

4. Rotor (10) nach einem der vorhergehenden Ansprüche, **dadurch gekennzeichnet, dass** pro axial verlaufender Ausnehmungen (20) eine oder mehrere Abdeckplatten (15) vorgesehen sind.

5. Rotor (10) nach Anspruch 4, **dadurch gekennzeichnet, dass** die Abdeckplatten (15) pro Ausnehmung (20) Stoß an Stoß oder überlappend angeordnet sind.

6. Rotor (10) nach einem der vorhergehenden Ansprüche, **dadurch gekennzeichnet, dass** zumindest eine Abdeckplatte (15) bezüglich der Permanentmagneten (11) konvex ausgebildet sind.

7. Permanenterregte dynamoelektrische rotatorische Maschine (1), mit einem Rotor (10) nach einem der vorhergehenden Ansprüche.

8. Verfahren zur Herstellung eines Rotors (10) nach einem der Ansprüche 1 bis 4, **gekennzeichnet durch** folgende Schritte:
- Stanzen einzelner Bleche,
- Paketieren der Bleche, insbesondere auf einer Welle (9), wobei die Ausnehmungen (20) im Wesentlichen axial fluchtend angeordnet werden,
- Einsetzen der Abdeckplatten (15) in die Ausnehmung (20) derart, dass axial verlaufende Öffnungen gebildet werden, in die die Permanentmagnete (11) eingeschoben werden,
- Ausgießen der verbleibenden Hohlräume zwischen den Abdeckplatten (15), den Blechen des Rotors (10) und den Permanentmagneten (11).
